Europäisches Patentamt

(19) European Patent Office

Office européen des brevets

(11) Publication number : **0 275 238 B1**

## (12) EUROPEAN PATENT SPECIFICATION

(45) Date of publication of patent specification :
**03.06.92 Bulletin 92/23**

(51) Int. Cl.⁵ : **H02P 7/00, E05F 15/00**

(21) Application number : **88830009.2**

(22) Date of filing : **12.01.88**

(54) **Circuit arrangement for controlling the electric motors used for raising and lowering glasses in motor vehicles and the like.**

(30) Priority : **15.01.87 IT 1909487**

(43) Date of publication of application :
**20.07.88 Bulletin 88/29**

(45) Publication of the grant of the patent :
**03.06.92 Bulletin 92/23**

(84) Designated Contracting States :
**DE ES FR GB**

(56) References cited :
**EP-A- 0 100 852**
**EP-A- 0 185 449**
**DE-A- 3 151 307**
**DE-A- 3 305 770**
**PATENT ABSTRACTS OF JAPAN volume 6, no. 91 (E-109)(969) 28th May 1982; & JP-A-5725176**

(73) Proprietor : **CAVIS CAVETTI ISOLATI S.p.A.**
**Via Roma, 31**
**I-15023 Felizzano (Alessandria) (IT)**

(72) Inventor : **Codrino, Giuseppe**
**Cavis Cavetti Isolati S p A**
**Via Roma, 31 15023 Felizzano (AL) (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

The present invention relates to a control arrangement for an electric motor, in particular the electric motor of a device for raising and lowering a window glass in a motor vehicle.

As is known, in the devices for raising and lowering glasses of motor vehicles a stop device must be used for switching off the power supply to the electric motors as the window glass has reached its end of stroke position, corresponding either to a complete opening or a complete closing of the glass.

DE-A-3 151 307 discloses such a control arrangement including transducer means for providing a signal having a frequency indicative of the rotation speed of the motor and means for controlling the energisation of the motor in dependence on said signal. The controlling means includes a rectifier and a capacitor for rectifying and smoothing the signal provided by the transducer means, the voltage on the capacitor controlling the switching on or off of a transistor.

Due to the provision of a capacitor in the controlling means, the prior art arrangement cannot react quickly to stalling of the motor when it reaches its end position.

### SUMMARY OF THE INVENTION

Accordingly, the object of the present invention is to overcome the above mentioned drawbacks.

Another object of the present invention is to provide an electric motor control circuit arrangement which is very reliable and safe in operation.

Yet another object of the present invention is to provide a control circuit arrangement which can be easily constructed starting from easily commercially available elements and circuit components.

According to the present invention, the above mentioned objects are achieved by an electric motor control circuit arrangement as specified in claim 1.

### BRIEF DESCRIPTION OF THE DRAWINGS

Further characteristics and advantages of the invention will become more apparent hereinafter from the following detailed description of a preferred embodiment of a control arrangement according to the invention, illustrated, by way of an indicative but not limitative example, in the figures of the accompanying drawings, where:

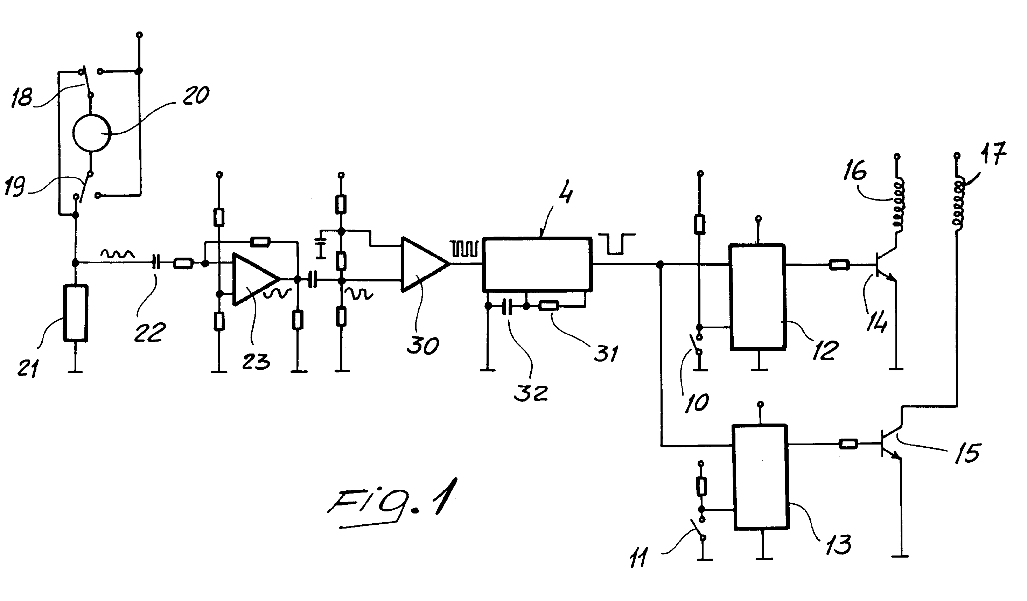

figure 1 shows a schematic electric diagram of the motor control circuit arrangement according to the present invention;

figure 2 shows a schematic bloc diagram of the motor control circuit arrangement shown in fig.1;

figure 3 shows a modified embodiment of the transducer associated with the motor control circuit arrangement according to the invention; and

figure 4 shows another transducer consisting of an electric coil.

### DESCRIPTION OF THE PREFERRED EMBODIMENT

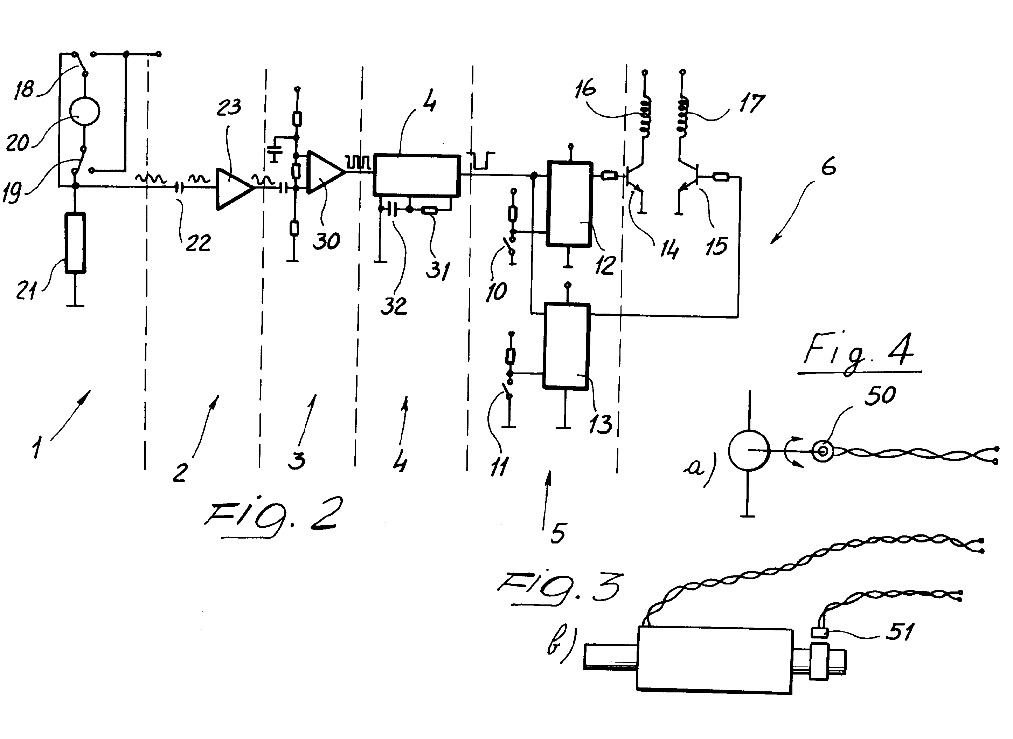

With reference to the figures of the accompanying drawings, the circuit arrangement for controlling electric motors of devices for raising and lowering motor vehicle glass windows according to the present invention comprises, as shown in figure 2, a transducer, indicated in general by the reference number 1, which is operatively coupled to an amplifier 2 driving an analogic to digital (A/D) converter 3 the output of which is coupled to a monostable circuit 4 driving the motor controlling assembly, indicated in general by the reference number 5, which controls the rotor energising assembly, indicated in general by the reference number 6.

The control circuit arrangement comprises a push-button 10 and a push button 11 for respectively controlling the raising and lowering strokes of the motor, said push-buttons being coupled to respective memory circuits 12 and 13 which, through first and second transistors 14 and 15 respectively, energize, respectively, first and second relays 16 and 17 which respectively drive or control a first contact 18 and a second contact 19 of the electric motor 20.

As shown two contacts are provided for reversing the polarity of the motor power supply, so as to obtain the desired direction of rotation of said electric motor.

As is known, the electric motors 20 which are usually associated to motor vehicle doors provided with electrically operated window glasses are of the commutator type provided with switching brushes. Thus the supply current which passes through the commutator motor windings is continuously interrupted with a frequency which depends on the rotation speed of said motor.

In particular, as it should be clear to thoses skilled in the art, the interruption or switching on and off of the current of the motor is caused by the switching of the brushes.

This current switching on and off is used for sensing the stop condition or rotation condition or the rotor of the motor. In particular, since the mentioned switching on and off generates an approximatively sine signal, by series coupling to the motor a resistor 21 of small value, it is be possible to take up and analyze the generated voltage.

The control circuit arrangement according to the present invention uses the above indicated voltage for sensing the rotation condition of the motor.

The voltage signal amplitude will be of the order of some tens of millivolts, whilst its frequency will depend on the motor number of poles and its rotation speed.

To properly exploit this signal, it has to be converted from analogic to digital. To this end there is provided a capacitor 22 which supplies the signal to an amplifier 23 at the output of which an amplified signal (by a factor of N) will be obtained, which is supplied to an A/D converting section 3.

For carrying out the mentioned A/D conversion there is used a comparator 30 having an output at the level +V, since at its not reversing input there is applied a voltage greater than that applied on its reversing input, thereby the two inputs may also be exchanged.

As the motor operates, at the output of the apmlifier 23 there is present a signal of the type shown in figure 2, which is applied to the reversing input of the comparator 30. This latter signal will be added to the DC voltage present at the input so as to cause the outputs of the comparator to toggle.

The output signal is applied to the section 4, or monostable module, with retriggering capability, which generates at the output thereof an adjustable-delay signal, which depends on the values of resistor 31 and capacitor 32, when the input pulses are not present.

Since these pulses are generated by the switching of the motor brushes, an absence of pulses will correspond to a stopped rotor condition, with the window glass at an end of stroke position.

The output signal of the monostable circuit is used for resetting the memory 12 which, previously, supplied the relay 16 for closing the first motor contact.

This signal also clears the second memory 13 which stores the drive supplied by the second push-button 11, in order to cause the motor to rotate in the opposite direction.

As the memories 12 and 13 are cleared, the transistors 14 and 15 will be switched off thereby disenergising the relays 16 and 17 so as to switch off the power supply to the motor which, because of the friction, will immediately stop.

The control circuit arrangement is independent from the motor winding current, temperature and any types of friction existing on the window glass guides, since the motor stop or rotation condition is verified.

The control circuit arrangement according to the present invention can be considered as an electronic type of end of stroke element or limit switch, which is effective to switch off the motor power supply as the motor is locked for a time period greter than that set by the values of the resistor 31 and capacitor 32.

In this connection it should be pointed out that the input signal of the A/D converter may also be obtained by coupling to the motor an electric coil 50, as shown in Figure 4, an acoustic sensor or other electromagnetic sensor 51, as shown in figure 3. In this case the motor rotation signal is obtained by using a conventional type of transducer.

From the above disclosure it should be apparent that the invention rully achieves the intended objects.

In particular it is to be pointed out that a motor control circuit arrangement has been provided which, for sensing the stopped condition of the rotor, uses very reliable elements which are not affected by the load conditions of the motor, but exclusively depend on the stopped or rotation condition of the motor rotor, which faithfully corresponds to the end of stroke condition of the window glass.

It should be apparent that the motor control circuit arrangement according to the present invention may also be used for controlling electric motors for driving other elements of the motor vehicle, such as electric seats, rearview mirrors, windows cleaning brushes and the like.

While the invention has been disclosed and illustrated with reference to a preferred embodiment thereof, it should be apparent that it is susceptible to many modifications and variations within the scope of the invention as defined in the accompanying claims.

## Claims

1. A control arrangement for an electric motor (20), in particular the electric motor of a device for raising and lowering a window glass in a motor vehicle, including means (21, 2, 3) for providing a signal having a frequency indicative of the rotation speed of the motor and means (4, 12-19) for controlling the energisation of the motor in dependence on said signal, characterized in that said controlling means includes a monostable circuit (4) receiving at its input said signal having a frequency indicative of the rotation speed of the motor and providing at its output a signal controlling the energisation of the motor.

2. A circuit arrangement according to the preceding claim, characterised in that said electric motor (20) is connected to first (18) and second (19) supply contacts controlling the rotation of said motor in the two directions, said contacts being coupled to respective relays (16, 17) which are driven, through corresponding transistors (14, 15), by memory circuits (12, 13) controlled by motor operating push buttons (10, 11).

3. A circuit arrangement according to one or more of the preceding claims, characterised in that said means providing a signal having a frequency indicative of the rotation speed of the motor includes a resistor (21) coupled in series to said motor and providing a voltage signal depending on the switching of the brushes of said electric motor.

4. A circuit arrangement according to claim 3, characterised in that said voltage signal is supplied to an amplifier circuit (2).

5. A circuit arrangement according to claim 4, characterised in that it comprises a comparator (30) processing the output signal of said amplifier (2).

6. A circuit arrangement according to one or more of the preceding claims, characterised in that said monostable circuit (4) controls first and second memory circuits (12, 13) included in said controlling means.

7. A circuit arrangement according to one or more of claims 1, 2 and 6, characterised in that said signal having a frequency indicative of the rotation speed of the motor is generated by an electric coil (50) coupled to said motor.

8. A circuit arrangement according to one or more of claims 1, 2 and 6, characterized in that said signal having a frequency indicative of the rotation speed of the motor is generated by an electromagnetic circuit comprising a transducer for sensing the rotation of the rotor of said motor.

## Patentansprüche

1. Schaltanordnung zur Steuerung eines elektrischen Motors (20), im besonderen des eletrischen Motors einer Vorrichtung für das Heben und Senken der Scheiben in Kraftfahrzeugen, mit Mitteln (21, 2, 3) zum Ergeben eines die Frequenz der Motordrehgeschwindigkeit zeigenden Signals und Mitteln (4 12-19) zur Steuerung der Motorerregung den Signal gemäß, dadurch gekennzeichnet, daß das Steuerungmittel mit einer monostabilen Schaltung (4) vorgesehen ist, die an ihren Eintritt das die Frequenz der Motordrehgeschwindigkeit zeigende Signal emfängt und an ihren Austritt ein die Motorerregung steuernde Signal abgibt.

2. Schaltanordnung nach vorhergehenden Anspruch, dadurch gekennzeichnete, daß der obengenannte Motor (20) mit ersten Versorgungkontakte (18) und zweiten Versorgungkontakte (19) verbunden ist, die die Drehung in beiden Richtungen steuern, wobei diese Kontakte mit entsprechenden Relais (16, 17) gekoppelt sind, und diesen Relais durch entsprechenden Transistore (14, 15) aus Antriebsdruckknöpfe (10, 11) des Motors gesteuert werden.

3. Schaltanordnung nach einem oder mehreren vorhergehenden Ansprüchen, dadurch gekennzeichnet, daß das Mittel zum Ergeben eines die Frequenz der Motordrehgeschwindigkeit zeigenden Signals, einen an den Motor serienangeschaltete Widerstand (21) einschließt, und ein Stromsignal ergibt, das von der Umschaltung der Bürsten des obengenannten elektrischen Motors abhängt.

4. Schaltanordnung nach Anspruch 3, dadurch gekennzeichnet, daß das obengenannten Stromsignal aus einem Verstärkerschaltung (2) ergeben wird.

5. Schaltanordnung nach Anspruch 4, dadurch gekennzeichnet, daß sie einen Komparator (30) einschließt, der ein Austrittssignal des obengenannten Verstärkers (2) ausarbeitet.

6. Schaltanordnung nach einem oder mehreren der vorigen Ansprüchen, dadurch gekennzeichnet, daß die obengenannte monostabile Schaltung (4) ersten und zweiten Speicherschaltungen (12, 13) steuert, die in den obengenannten Steuerungmitteln eingeschlossen sind.

7. Schaltanordnung nach einem oder mehreren der Ansprüchen 1, 2 und 6, dadurch gekennzeichnet, daß das obengenannte die Frequenz der Motordrehgeschwindigkeit zeigende Signal, aus einem mit dem obengenannten Motor gekoppelten elektrischen Windung (50) ergeben wird.

8. Schaltanordnung nach einem oder mehreren der Ansprüchen 1, 2, und 6, dadurch gekennzeichnet, daß das obengenannte die Frequenz der Motordrehgeschwindigkeit zeigende Signal aus einer elektromagnetischen Schaltung ergeben wird, die, zum Entnehmen der Drehung des obengenannten Motorrotors, einen Transduktor einschließt.

## Revendications

1. Arrangement pour contrôler un moteur électrique (20), en particulier pour contrôler le moteur électrique d'un dispositif pour l'élévation et l'abaissement des vitres dans un véhicule à moteur, comprenant moyens (21, 2, 3) pour émettre un signal présentant une fréquence indicative de la vitesse de rotation du moteur et moyens (4, 12-19) pour contrôler l'excitation du moteur selon ledit signal, caractérisé en ce que lesdits moyens de contrôle comprennent un circuit (4) monostabile (4) recevant à son entrée ledit signal présentant une fréquence indicative de la vitesse de rotation du moteur et donnant à sa sortie un signal contrôlant l'excitation du moteur.

2. Arrangement de circuit selon la revendication précédente, caractérisé en ce que ledit moteur électrique (20) est connecté avec premiers contacts (18) d'alimentation et avec deuxièmes contacts (19) d'alimentation contrôlants la rotation dudit moteur dans les deux sens, lesdits contacts étant accouplés avec relais (16, 17) respectifs qui sont commandés, au moyen de transistors (14, 15) respectifs, par circuits de mémoire (12, 13) contrôlés par boutons poussoirs (10, 11) d'actionnement du moteur.

3. Arrangement de circuiti selon l'une ou plusieurs des revendications précédentes, caractérisé en ce que ledit moyen donnant un signal présentant une fréquence indicative de la vitesse de rotation du moteur comprend un résisteur (21) accouplé en série avec ledit moteur et émettant un signal de voltage dépendant de la commutation des balais dudit moteur électrique.

4. Arrangement de circuit selon la revendication 3, caractérisé en ce que ledit signal de voltage est alimenté à un circuit amplificateur (2).

5. Arrangement de circuit selon la revendication 4, caractérisé en ce qu'il comprend un comparateur (30) élaborant un signal de sortie dudit amplificateur (2).

6. Arrangement de circuit selon l'une ou plusieurs des revendications précédentes, caractérisé en ce que ledit circuit monostabile (4) contrôle des circuits de mémoire premiers et deuxièmes (12, 13) compris dans lesdits moyens de contrôle.

7. Arrangement de circuit selon l'une ou plusieurs des revendications 1, 2 et 6, caractérisé en ce que ledit signal présentant une fréquence indicative de la vitesse de rotation du moteur est généré par une spirale électrique (50) accouplé audit moteur.

8. Arrangement de circuit selon l'une ou plusieurs des revendications 1, 2 et 6, caractérisé en ce que ledit signal présentant une fréquence indicative de la vitesse de rotation du moteur est généré par un circuit électromagnétique conprenant un transducteur pour relever la rotation du rotor dudit moteur.

Fig.1

Fig. 2

Fig. 4

Fig. 3